# EUROPÄISCHE PATENTSCHRIFT

(11) **EP 2 206 579 B1**
(45) Veröffentlichungstag und Bekanntmachung des Hinweises auf die Patenterteilung: **22.02.2012**
(21) Anmeldenummer: 09177836.5
(22) Anmeldetag: 03.12.2009
(51) Int. Cl.: B23Q 11/00

(54) **Absaughaube**
Extractor hood
Capot d'aspiration

(30) Priorität: 08.01.2009 DE 102009000084
(43) Veröffentlichungstag der Anmeldung: 14.07.2010
(73) Patentinhaber: HILTI Aktiengesellschaft, 9494 Schaan (LI)
(72) Erfinder: Glogger, Josef, 86807 Buchloe (DE); Ginter, Herbert, 87656 Germaringen (DE); Löschky, Ingo, 86916 Kaufering (DE)

(56) Entgegenhaltungen:
- EP-A1- 0 799 674
- DE-A1- 4 038 941
- DE-A1- 10 342 515
- DE-A1- 19 647 575
- DE-A1-102005 062 888
- DE-A1-102008 024 361
- DE-U1-202007 001 457
- DE-U1-202007 002 845
- GB-A- 2 294 538

## Beschreibung

Die Erfindung betrifft eine Absaughaube für beim Bohren anfallendes Bohrklein und Bohrmehl, der im Oberbegriff des Patentanspruchs 1 genannten Art.

Beim Bohren von Bohrlöchern mit einem Werkzeuggerät, wie z. B. mit einem handgeführten Bohrhammer, in einem Bauteil, wie in einer Decke oder in einer Wand, fällt Bohrklein und Bohrmehl an, welches den umgebenden Raum verschmutzen kann. Auch beim Reinigen eines erstellten Bohrlochs, beispielsweise für ein chemisch verankertes Befestigungselement, mit einer Reinigungsvorrichtung, wie einer Bürstenvorrichtung oder einer Ausblasvorrichtung, fällt ebenfalls Bohrklein und Bohrmehl an, welches den umgebenden Raum verschmutzen kann.

Um eine Verschmutzung des umgebenden Raums z. B. während den vorgenannten Arbeiten zu verhindern, ist aus der EP 0 799 674 A1 eine Absaughaube bekannt, die einen einen Aufnahmeraum umschliessenden Grundkörper aufweist. Von dem Grundkörper ragt ein Anschlussstutzen für den Anschluss eines Schlauchs einer Vakuumquelle ab. An dem Grundkörper ist eine Öffnung vorgesehen, an der eine Dichteinrichtung mit einer Durchführöffnung für ein Werkzeug vorgesehen ist. Die Dichteinrichtung umfasst eine geschlitzte Membrane als Dichtelement mit der Durchführöffnung für das Werkzeug und einen Ring als Halteelement zum Festlegen des Dichtelements am Grundkörper, wobei das Dichtelement im festgelegten Zustand des Halteelements zwischen dem Halteelement und dem Grundkörper eingeklemmt ist. Das Halteelement ist zum Festlegen des Dichtelements mit Schrauben am Grundkörper festgelegt.

An dem Anschlussstutzen wird ein Schlauch einer Vakuumquelle, wie ein Staubsauger, angeschlossen und die Absaughaube anschliessend vor dem Erstellen des Bohrlochs an der entsprechenden Stelle am Bauteil positioniert. Durch die Durchführöffnung im Dichtelement hindurch wird das Werkzeug zum Erstellen des Bohrlochs mit dem Untergrund in Anlage gebracht und das Werkzeuggerät sowie die Vakuumquelle in Betrieb gesetzt. Das beim Bohren anfallende Bohrklein und Bohrmehl dringt in den Aufnahmeraum und wird durch den von der Vakuumquelle erzeugten Unterdruck aus diesem abgesaugt. Das Dichtelemente stellt sicher, dass nahezu kein Bohrklein und Bohrmehl neben dem Werkzeug unbeabsichtigt austritt und den umgebenden Raum verschmutzt.

Nachteilig an der bekannten Lösung ist, dass nach einer gewissen Gebrauchsdauer das Dichtelement verschleissen kann und somit eine Abdichtung der Öffnung im Grundkörper gegen austretendes Bohrklein und Bohrmehl nicht mehr gewährleistet ist. Zudem kann durch ein verschlissenes Dichtelement Falschluft in den Aufnahmeraum des Grundkörpers eintreten, welche zu einer geringeren Saugleistung führt. Zum Auswechseln eines verschlissenen Dichtelements müssen die Schrauben als Festlegemittel des Halteelements mit einem Werkzeug gelöst und nach der Anordnung eines neuen Dichtelements zur Festlegung des Halteelements am Grundkörper wieder festgeschraubt werden, was aufwändig ist und ein für die Schrauben geeignetes Werkzeug bedarf.

Die DE 196 47 575 A1 beschreibt eine Bohreinrichtung mit Bohrstaubabsaugung oder Wasserspülung, wobei eine Bajonettverbindung vorgesehen ist. Aus der DE 20 2007 001 457 U1 geht ein Hohlbohrsystem mit Absaugung hervor, bei dem der Hohlbohrer mit Antriebsachse von dem Absaugsystem werkzeuglos entnommen werden kann. Gemäss DE 20 2007 002 845 U1 ist eine Bohrschablone mit Absaugkanälen vorgesehen, wobei das an die Bohrschablone anzusetzende Bearbeitungswerkzeug einen Verrieglungskopf aufweist, welcher über Bajonett-Verriegelungsklauen festgelegt wird. Die DE 103 42 515 A1 beschreibt eine Absaugvorrichtung für ein Bohrgerät mit einem Saugrohr, welches über formschlüssige Schnellverbindungen mit einem Saugkopf und einer Lüftereinrichtung verbindbar ist, wobei die Schnellverbindungen mindestens einen bajonettartigen Verschluss aufweisen. Die DE 10 2005 062 888 A1 offenbart eine Vorrichtung zur Bohrerabdichtung mit einem drehbar gelagerten Dichtungselement. Aus der DE 40 38 941 A1 geht eine Vorrichtung zur Absaugung von Bohrklein hervor, welche Lufteintrittskanäle aufweist. Eine weitere Bohrstaub-Sammeleinrichtung wird in der GB 2 294 538 A gezeigt. Die nachveröffentlichte DE 10 2008 024 361 A1 beschreibt einen Messerträger mit abschaltbarer Befederung, wobei über den Umfang eines Kreismessers verteilt eine Mehrzahl von Fixierstiften an dem Messerträger angeordnet ist.

Aufgabe der Erfindung ist es, eine Absaughaube für beim Bohren anfallendes Bohrklein und Bohrmehl zu schaffen, bei der die Dichtelemente einfach und bedarfsweise anordnenbar sind.

Die Aufgabe ist durch die Merkmale des unabhängigen Anspruchs gelöst. Vorteilhafte Weiterbildungen sind in den Unteransprüchen dargelegt.

Gemäss der Erfindung ragt an dem Grundkörper ein Festlegeabschnitt ab, an dem das Halteelement werkzeuglos festlegbar ist, und ragen um die Öffnung im Grundkörper herum mehrere Fixierstifte von dem Grundkörper ab, wobei das zumindest eine Dichtelement mehrere Ausrichtöffnungen aufweist, welche im festgelegten Zustand des Haltelements von den Fixierstiften durchdrungen sind.

Durch die werkzeuglose Festlegung des Halteelements lässt sich ein Dichtelement einfach von aussen her z. B. durch ein gleichartiges oder eine andere Art von Dichtelement auswechseln beziehungsweise ersetzen und anschliessend wieder am Grundkörper befestigen. Beispielsweise ist das Dichtelement eine Membrane mit einer Öffnung aus Kunststoff oder ein Teil mit mehreren Bürstenelementen, zwischen denen die Durchführöffnung für das Werkzeug gebildet ist. Damit kann je nach Art und Grösse des Werkzeugs zumindest ein auf dieses abgestimmtes Dichtelement leicht und ohne ein zusätzliches Werkzeug an der Absaughaube festgelegt werden.

Vorzugsweise ragt der Festlegeabschnitt von der dem Aufnahmeraum abgewandten Seite des Grundkörpers nach aussen hin ab, womit das Halteelement zum Einklemmen des zumindest einen Dichtelements einfach von aussen an dem Festlegeabschnitt festlegbar ist. Bevorzugt sind der Festlegeabschnitt und das Halteelement Teile eines Bajonettverschlusses, womit mit einer Drehung um einen geringen Drehwinkel das Halteelement und somit auch das zumindest eine Dichtelement an dem Grundkörper festgelegt oder von diesem entfernbar sind. Vorteilhaft ist der Festlegeabschnitt von mehreren Hintergreifabschnitten gebildet und das Halteelement weist, vorteilhaft mit einer Klemmkontur versehene Vorsprünge auf, die im festgelegten Zustand des Halteelements von den Hintergreifabschnitten des Festlegeabschnitts zumindest teilweise umgriffen werden.

Alternativ dazu weist der Festlegeabschnitt einen Gewindeabschnitt auf, z. B. ein Innengewinde, und das Halteelement weist einen entsprechend ausgebildeten Gegengewindeabschnitt auf, z. B. ein Aussengewinde, der mit dem Gewindeabschnitt am Festlegeabschnitt verschraubbar ist.

Vorzugsweise umfasst die Dichteinrichtung mehr als ein Dichtelement, die versetzt zueinander am Grundkörper festlegbar sind. Jedes der Dichtelemente wird anders von dem eingeführten Werkzeug ausgelenkt, womit auch bei Werkzeugen mit grössereh Durchmessern eine sichere Abdichtung der Öffnung gewährleistet ist.

Bevorzugt sind alle Dichtelemente gleich ausgebildet, womit die Dichtelemente in grossen Mengen als Massenprodukt und somit kostengünstig herstellbar sind. Zudem ist die Anwendung derselben für den Anwender einfach, da keine Verwechslungen bei der Anordnung am Grundkörper auftreten können.

Alternativ werden unterschiedliche Dichtelemente miteinander kombiniert, die sich beispielsweise im Material und ihrer Materialstärke unterscheiden.

Der Anwender kann in einfacher Weise und ohne Werkzeug z. B. durch Variation der Anzahl der Dichtelemente, der Materialien der Dichtelemente und der Zuordnung der Dichtelemente zueinander eine Abstimmung auf die jeweilige Applikation treffen.

Erfindungsgemäss ragen um die Öffnung im Grundkörper herum mehrere Fixierstifte von dem Grundkörper ab und das zumindest eine Dichtelement weist mehrere Ausrichtöffnungen auf, welche im festgelegten Zustand des Haltelements von den Fixierstiften durchdrungen sind. Bei der Anordnung des zumindest einen Dichtelements am Grundkörper stellen die vom Grundkörper nach aussen, d. h. dem Aufnahmeraum abgewandt abragenden Fixierstifte eine definierte Lageposition des zumindest einen Dichtelements am Grundkörper sicher. Vorteilhaft sind die Fixierstifte in gleichmässigen Abständen, radial umlaufend um ein Zentrum der Öffnung im Grundkörper an diesem angeordnet, womit das zumindest eine

Dichtelement um den entsprechenden Winkelbereich verdreht angeordnet werden kann. Weiter vorteilhaft weist das Dichtelement eine Anzahl von Ausrichtöffnungen auf, die der Anzahl der am Grundkörper angeordneten Fixierstifte entspricht. Insbesondere wenn mehr als ein Dichtelement vorgesehen wird, lässt sich durch die Fixierstifte und die Ausrichtöffnungen jedes der Dichtelemente ausgerichtet, z. B. in einer definierten versetzten Anordnung zueinander am Grundkörper festlegen.

Bevorzugt weist das zumindest eine Dichtelement im Grundriss eine kreisförmige Ausgestaltung und Lamellen auf, die ausgehend von dem Zentrum nach radial aussen, durch nicht ganz bis zum Aussenumfang verlaufende Schlitze gebildet sind. Die Lamellen weichen beim Einführen des Werkzeugs leicht aus und legen sich an die Aussenseite des Werkzeugs während dem Bohrvorgang an, womit eine vorteilhafte Abdichtung auch im Betrieb des Werkzeugs gewährleistet ist. Vorteilhaft ist das Dichtelement aus einem flexiblen elastischen Material gefertigt, womit das Dichtelement in seine Ausgangsausgestaltung zurückkehrt, wenn das Werkzeug wieder entfernt wird. Vorteilhaft ist das Dichtelement eine Membrane, die weiter vorteilhaft aus einem Kunststoff gefertigt ist.

Vorzugsweise sind die Ausrichtöffnungen in einem Aussenwinkel zueinander angeordnet, der von einem Innenwinkel, in welchem die Schlitze der Lamellen zueinander angeordnet sind, abweicht, womit insbesondere bei der Anordnung von mehreren Dichtelementen diese bei einer versetzten Anordnung zueinander keine sich axial überlappende Schlitze aufweisen.

Bevorzugt ist im Mittelpunkt des zumindest einen Dichtelements eine Zentrumsöffnung vorgesehen, womit das Werkzeug einfach in die Absaughaube einführbar ist.

Die Erfindung wird nachstehend anhand eines Ausführungsbeispiels näher erläutert. Es zeigen:
- Fig. 1: Eine Absaughaube in einer perspektivischen Explosionsdarstellung;
- Fig. 2: die Absaughaube im Querschnitt; und
- Fig. 3: am Grundkörper angeordnete Dichtelemente im Grundriss.

Grundsätzlich sind in den Figuren gleiche Teile mit den gleichen Bezugszeichen versehen.

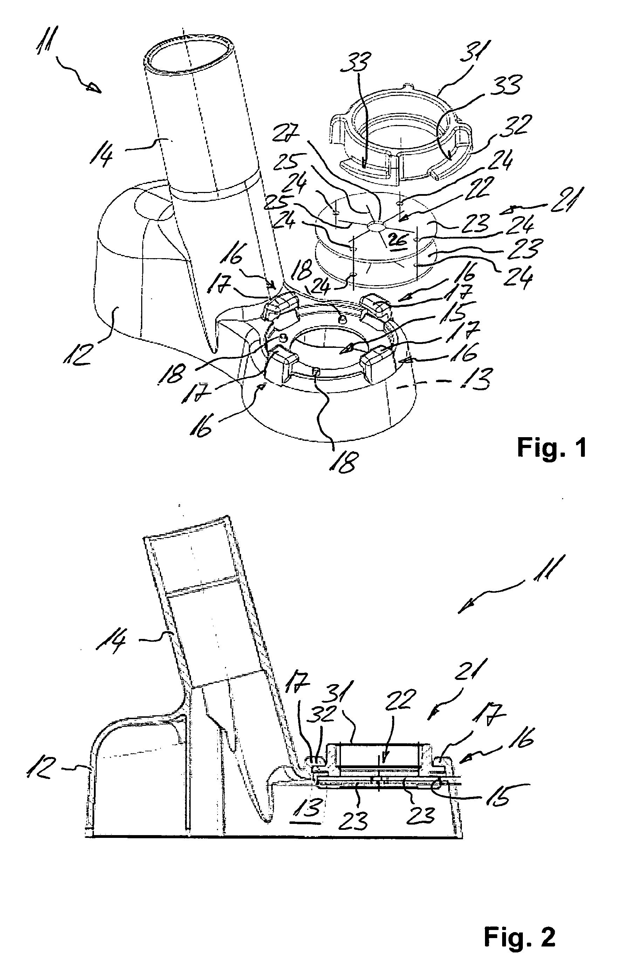

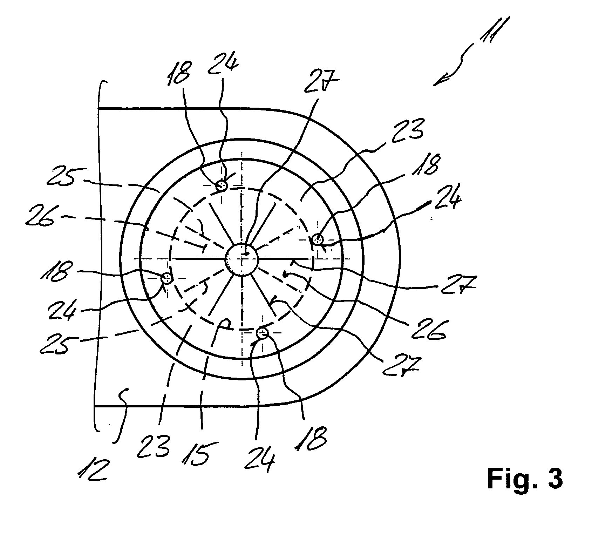

Die in den Figuren 1 bis 3 dargestellte Absaughaube 11 für beim Bohren anfallendes Bohrklein und Bohrmehl weist einen Grundkörper 12 auf, der einen Aufnahmeraum 13 umschliesst. Von dem Grundkörper 12 ragt ein Anschlussstutzen 14 für den Anschluss eines Schlauchs einer hier nicht dargestellten Vakuumquelle ab. An dem Grundkörper 12 ist weiter eine Öffnung 15 vorgesehen, an der eine Dichteinrichtung 21 mit einer Durchführöffnung 22 für ein hier nicht dargestelltes Werkzeug vorgesehen ist. Die Dichteinrichtung 21 umfasst zwei gleich ausgebildete Dichtelemente 23, die jeweils die Durchführöffnung 22 für das Werkzeug aufweisen und versetzt zueinander angeordnet sind, und ein Halteelement 31 zum Festlegen der Dichtelemente 23 am Grundkörper 12.

An dem Grundkörper 12 ragt ein Festlegeabschnitt 16 von der dem Aufnahmeraum 13 abgewandten Seite des Grundkörpers 12 nach aussen hin ab, an dem das Halteelement 31 werkzeuglos festlegbar ist. Der Festlegeabschnitt 16 und das Halteelement 31 sind Teile eines Bajonettverschlusses. Der Festlegeabschnitt 16 ist zu diesem Zweck von vier umfänglich gleichmässig zueinander beabstandeten Hintergreifabschnitten 17 gebildet. Das Halteelement 31 weist entsprechend vier radial abragende, sich teilweise entlang des Umfangs, über einen Winkelbereich von weniger als 90° erstreckende Vorsprünge 32 auf. Auf der im festgelegten Zustand des Halteelements 31 dem Grundkörper 12 abgewandten Seite 33 der Vorsprünge 32 ist eine Klemmkontur vorgesehen, so dass die Dicke der Vorsprünge 32 jeweils von deren freien Ende ausgehend zunimmt. Durch Verdrehen des Halteelements 31 um einen Winkelbereich von maximal 90° kommt die mit der Klemmkontur versehene Seite 33 der Vorsprünge 32 mit den Hintergreifabschnitten 17 in Anlage, wobei die Dichtelemente 23 zwischen dem Halteelement 31 und dem Grundkörper 12 eingeklemmt werden.

Um die Öffnung 15 im Grundkörper 12 herum ragen vier, umfänglich gleich zueinander beabstandete Fixierstifte 18 von der dem Aufnahmeraum 13 abgewandten Seite des Grundkörpers 12 nach aussen ab. Die Dichtelemente 23 weisen jeweils vier, umfänglich gleich zueinander beabstandete Ausrichtöffnungen 24 auf, welche im festgelegten Zustand des Haltelements 31 von den Fixierstiften 18 durchdrungen sind.

Die Dichtelemente 23 weisen im Grundriss jeweils eine kreisförmige Ausgestaltung und Lamellen 26 auf, die ausgehend von dem Zentrum nach radial aussen, durch nicht ganz bis zum Aussenumfang des Dichtelements 23 verlaufende Schlitze 25 gebildet sind. Die Dichtelemente 23 sind als Membranen aus einem Kunststoff gefertigt. Die Ausrichtöffnungen 24 sind in einem Aussenwinkel von 90° zueinander angeordnet, der von einem Innenwinkel von 60°, in welchem die Schlitze 25 der Lamellen 26 zueinander angeordnet sind, abweicht. Im Mittelpunkt der Dichtelemente 23 ist eine Zentrumsöffnung 27 vorgesehen.

## Patentansprüche

1. Absaughaube für beim Bohren anfallendes Bohrklein und Bohrmehl mit einem einen Aufnahmeraum (13) umschliessenden Grundkörper (12), von dem ein Anschlussstutzen (14) für den Anschluss eines Schlauchs einer Vakuumquelle abragt und an dem eine Öffnung (15) vorgesehen ist, an der eine Dichteinrichtung (21) mit einer Durchführöffnung (22) für ein Werkzeug vorgesehen ist, wobei
die Dichteinrichtung (21) zumindest ein Dichtelement (23) mit der Durchführöffnung (22) für das Werkzeug und ein Halteelement (31) zum Festlegen des zumindest einen Dichtelements (23) am Grundkörper (12) umfasst, wobei das zumindest eine Dichtelement (23) im festgelegten Zustand des Halteelements (31) zwischen dem Halteelement (31) und dem Grundkörper (12) eingeklemmt ist, **dadurch gekennzeichnet, dass**
an dem Grundkörper (12) ein Fesäegeabschnitt (16) abragt, an dem das Halteelement (31) werkzeuglos festlegbar ist, und
dass um die Öffnung (15) im Grundkörper (12) herum mehrere Fixierstifte (18) von dem Grundkörper abragen (12) und das zumindest eine Dichtelement (23) mehrere Ausrichtöffnungen (24) aufweist, welche im festgelegten Zustand des Haltelements (31) von den Fixierstiften (18) durchdrungen sind.

2. Absaughaube nach Anspruch 1, **dadurch gekennzeichnet, dass** der Festlegeabschnitt (16) von der dem Aufnahmeraum (13) abgewandten Seite des Grundkörpers (12) nach aussen hin abragt.

3. Absaughaube nach Anspruch 1 oder 2, **dadurch gekennzeichnet, dass** der Festlegeabschnitt (16) und das Halteelement (31) Teile eines Bajonettverschlusses sind.

4. Absaughaube nach einem der Ansprüche 1 bis 3, **dadurch gekennzeichnet, dass** die Dichteinrichtung (21) mehr als ein Dichtelement (23) umfasst, die versetzt zueinander am Grundkörper (12) festlegbar sind.

5. Absaughaube nach Anspruch 4, **dadurch gekennzeichnet, dass** alle Dichtelemente (23) gleich ausgebildet sind.

6. Absaughaube nach einem der Ansprüche 1 bis 5, **dadurch gekennzeichnet, dass** das zumindest eine Dichtelement (23) im Grundriss eine kreisförmige Ausgestaltung und Lamellen (26) aufweist, die ausgehend von dem Zentrum nach radial aussen, durch nicht ganz bis zum Aussenumfang des Dichtelements (23) verlaufende Schlitze (25) gebildet sind.

7. Absaughaube nach Anspruch 6, **dadurch gekennzeichnet, dass** die Ausrichtöffnungen (24) in einem Aussenwinkel zueinander angeordnet sind, der von einem Innenwinkel, in welchem die Schlitze (25) der Lamellen (26) zueinander angeordnet sind, abweicht.

8. Absaughaube nach einem der Ansprüche 1 bis 7, **dadurch gekennzeichnet, dass** im Mittelpunkt des zumindest einen Dichtelements (23) eine Zentrumsöffnung (27) vorgesehen ist.

## Claims

1. Extractor hood for particles and dust produced during drilling, with a base body (12) enclosing a receiving chamber (13), from which a connecting nozzle (14) for connecting the hose of a vacuum source projects and on which an opening (15) is provided at which a sealing device (21) with a leadthrough opening (22) for a tool is provided, wherein
the sealing device (21) comprises at least one seal (23) with the leadthrough opening (22) for the tool and a retaining element (31) for fastening the at least one seal (23) to the base body (12), the at least one seal (23) being clamped between the retaining element (31) and the base body (12) in the fastened condition of the retaining element (31), **characterized in that**
a fastening portion (16), to which the retaining element (31) can be fastened without the use of a tool, projects from the base body (12), and
**in that** a number of fixing pins (18) project from the base body (12) around the opening (15) in the base body (12) and the at least one seal (23) has a number of registering openings (24) which are transfixed by the fixing pins (18) in the fastened condition of the retaining element (31).

2. Extractor hood according to Claim 1, **characterized in that** the fastening portion (16) projects outwards from the side of the base body (12) turned away from the receiving chamber (13).

3. Extractor hood according to Claim 1 or Claim 2, **characterized in that** the fastening portion (16) and retaining element (31) form parts of a bayonet coupling.

4. Extractor hood according to any one of Claims 1 to 3, **characterized in that** the sealing device (21) comprises more than one seal (23), the seals being fastenable to the base body (12) in staggered positions.

5. Extractor hood according to Claim 4, **characterized in that** all seals (23) are identical.

6. Extractor hood according to any one of Claims 1 to 5, **characterized in that** the form of the at least one seal (23) is circular in plan and has lobes (26) which starting from the centre and extending radially outwards are formed by slits (25) reaching only part of the way towards the outer periphery of the seal (23).

7. Extractor hood according to Claim 6, **characterized in that** the registering openings (24) are arranged at an external angle to each other that differs from an internal angle at which the slits (25) of the lobes (26) are arranged with respect to each other.

8. Extractor hood according to any one of Claims 1 to 7, **characterized in that** a central opening (27) is provided at the centre of the at least one seal (23).

## Revendications

1. Capot d'aspiration pour les débris de forage et la poussière de forage se produisant lors du forage, comprenant un corps de base (12) entourant un compartiment de réception (13) d'où dépasse une tubulure de raccordement (14), pour le raccordement d'un tuyau d'une source de vide, et dans laquelle est prévue une ouverture (15), où un dispositif d'étanchéité (21) avec une ouverture de passage (22) pour un outil est organisé,
le dispositif d'étanchéité (21) comprenant au moins un élément d'étanchéité (23) en plus de l'ouverture de passage (22) pour l'outil et un élément de fixation (31) pour le maintien en place d'au moins un élément d'étanchéité (23) sur le corps de base (12), l'élément d'étanchéité (23) étant au moins inséré entre l'élément de fixation (31) et le corps de base (12) dans une position fixe de l'élément de fixation (31), **caractérisé en ce**
**qu'**une partie de fixation (16) dépasse du corps de base (12) sur laquelle l'élément de fixation (31) peut être fixé sans outil, et
**que** plusieurs tiges de fixation (18) dépassent du corps de base (12) autour de l'ouverture (15) dans le corps de base (12) et qu'un élément d'étanchéité (23) présente au moins plusieurs ouvertures d'alignement (24) qui sont traversées par les tiges de fixation (18) dans une position donnée de l'élément de fixation (31).

2. Capot d'aspiration selon la revendication 1 **caractérisé en ce que** la partie de fixation (16) dépasse du compartiment de réception (13) vers l'extérieur sur la face éloignée du corps de base (12).

3. Capot d'aspiration selon les revendications 1 ou 2 **caractérisé en ce que** la partie de fixation (16) et l'élément de fixation (31) constituent les parties d'une liaison par baïonnette.

4. Capot d'aspiration selon l'une des revendications de 1 à 3 **caractérisé en ce que** le dispositif d'étanchéité (21) comprend plus qu'un élément d'étanchéité (23), éléments qui peuvent être fixés, espacés les uns des autres, sur le corps de base (12).

5. Capot d'aspiration selon la revendication 4 **caractérisé en ce que** tous les éléments d'étanchéité (23) sont conçus de manière identique.

6. Capot d'aspiration selon l'une des revendications de 1 à 5 **caractérisé en ce qu'**au moins un élément d'étanchéité (23) présente schématiquement une conformation circulaire et des lamelles (26), qui sont formées en partant du centre radialement vers l'extérieur par des fentes (25) qui ne sont pas creusées jusqu'au diamètre extérieur de l'élément d'étanchéité (23).

7. Capot d'aspiration selon la revendication 6 **caractérisé en ce que** les ouvertures d'alignement (24) sont agencées les unes par rapport aux autres dans un angle externe qui diverge par rapport à un angle interne dans lequel les fentes (25) des lamelles (26) sont disposées les unes par rapport aux autres.

8. Capot d'aspiration selon l'une des revendications de 1 à 7 **caractérisé en ce qu'**au centre d'au moins un élément d'étanchéité (23) une ouverture centrale (27) est prévue.
